# DEMANDE DE BREVET EUROPEEN

(11) **EP 0 603 064 A1**
(43) Date de publication de la demande: **22.06.1994**
(21) Numéro de dépôt: 93403027.1
(22) Date de dépôt: 14.12.1993
(51) Int. Cl.: B60H 1/32

(54) **Dispositif pour abaisser la température ambiante dans l'habitacle d'un véhicule**

(30) Priorité: 14.12.1992 FR 9215013
(71) Demandeur: IMRA EUROPE S.A., F-06560 Valbonne (FR)
(72) Inventeur: Fonzes, Georges, Résidence "Les Primevères", F-06600 Antibes (FR); Bezian, Jean-Jacques, Villa Raphael, F-06600 Antibes (FR)
(74) Mandataire: Leszczynski, André

(57) **Abrégé**

Dispositif pour abaisser la température ambiante dans l'habitacle d'un véhicule par pulvérisation de gouttelettes d'eau.

Il comporte un brumisateur d'eau (3) qui est directement logé dans l'habitacle du véhicule (1), et qui diffuse de fines gouttelettes d'eau directement dans l'habitacle du véhicule (1).

## Description

La présente invention est relative à un dispositif pour abaisser la température ambiante dans l'habitacle d'un véhicule.

On connaît déjà de tels dispositifs dans lesquels de fines gouttelettes d'eau sont pulvérisées dans un conduit d'aération et entraînées par un courant d'air dans l'habitacle du véhicule.

Ces dispositifs présentent l'inconvénient que leur fonctionnement nécessite un apport d'énergie important, et procure un résultat qui n'est pas toujours satisfaisant, notamment du fait que seul l'air ambiant subit un refroidissement sensible, les surfaces de l'habitacle conservant une température relativement élevée.

La présente invention vise à fournir un dispositif pour abaisser la température ambiante dans l'habitacle d'un véhicule qui est simple et économique et ne présente pas les inconvénients des dispositifs connus.

La présente invention a pour objet un dispositif pour abaisser la température ambiante dans l'habitacle d'un véhicule par pulvérisation de gouttelettes d'eau, caractérisé par le fait qu'il comporte un brumisateur d'eau qui est directement logé dans l'habitacle du véhicule, de préférence au voisinage du plafond de ce dernier et qui diffuse de fines gouttelettes d'eau directement dans l'habitacle du véhicule.

Par brumisateur au sens de l'invention, on entend un pulvérisateur apte à délivrer des gouttelettes d'un diamètre compris entre 0,1 et 10µm et de préférence de l'ordre de 3µm.

Le dispositif selon la présente invention est particulièrement efficace dans la mesure où il tire profit du grand volume d'air chaud présent dans l'habitacle, ce qui favorise l'évaporation de l'eau pulvérisée, et donc la diminution de la température ambiante par consommation de la chaleur latente d'évaporation de l'eau.

Ainsi, non seulement l'air ambiant mais également les surfaces chaudes de l'habitacle sont efficacement refroidis grâce au dispositif de la présente invention.

En outre, il est clair que l'efficacité du dispositif de la présente l'invention est d'autant plus grande que la température de l'air enfermé dans l'habitacle est initialement élevée.

Dans un mode de réalisation préféré de l'invention, le brumisateur d'eau comporte un récipient contenant de l'eau, un émetteur à ultra-sons immergé dans ce récipient et un dispositif soufflant apte à créer un courant d'air au-dessus de la surface de l'eau, pour diffuser dans l'habitacle le brouillard créé à la surface de l'eau par l'émetteur à ultra-sons.

Dans une variante préférée de ce mode de réalisation, un réservoir d'eau externe, muni d'une pompe, est raccordé au récipient du brumisateur par un conduit d'amenée d'eau, et le récipient du brumisateur comporte un capteur du niveau de l'eau, qui commande la pompe du réservoir externe de manière à maintenir sensiblement constant le niveau de l'eau dans le récipient du brumisateur.

De préférence, le réservoir d'eau externe est situé dans un endroit peu exposé aux rayons du soleil, par exemple dans le coffre à bagages du véhicule.

Dans un mode de réalisation particulier de l'invention, l'alimentation électrique du brumisateur est logée dans le corps du réservoir d'eau externe, ce qui permet d'utiliser l'eau contenue dans ce réservoir pour refroidir l'alimentation électrique pendant le fonctionnement du brumisateur.

Dans un mode de réalisation préféré de l'invention, une horloge électronique permet de déclencher le fonctionnement du brumisateur à une heure programmée à l'avance, par exemple une trentaine de minutes avant l'heure prévue d'utilisation du véhicule.

Dans un autre mode de réalisation, des moyens de télécommande permettent de déclencher le fonctionnement du brumisateur avant de pénétrer dans le véhicule.

Selon un autre mode de réalisation, des capteurs thermométriques et hygrométriques permettent de déclencher le fonctionnement du brumisateur lorsque la température à l'intérieur de l'habitacle dépasse une certaine valeur ou lorsque l'hygrométrie est trop faible.

Inversement, de tels capteurs peuvent servir à interrompre le fonctionnement du brumisateur dès que la température est suffisamment basse ou dès que l'hygrométrie dans l'habitacle est trop importante, de manière à éviter tout risque de condensation.

Avantageusement, on met en oeuvre l'invention dans un véhicule muni de moyens permettant le renouvellement permanent de l'air enfermé dans l'habitacle, par exemple un ou des ventilateurs.

Ainsi, on limite les risques de saturation en eau de l'air qui pourraient conduire à une condensation de l'eau sur les parois de l'habitacle.

Dans le but de mieux faire comprendre l'invention, on va en décrire maintenant un mode de réalisation donné à titre d'exemple non limitatif de la portée de l'invention, en référence au dessin annexé dans lequel :
- la figure 1 est une vue en perspective d'un véhicule équipé d'un dispositif selon un mode de réalisation particulier de l'invention,
- la figure 2 représente une variante du brumisateur de la figure 1,
- la figure 3 est une vue schématique de côté du brumisateur de la figure 1 en cours de fonctionnement,
- la figure 4 est une vue de-dessus de la figure 3,
- les figures 5 à 10 représentent des résultats de tests effectués sur un véhicule exposé aux rayons du soleil.

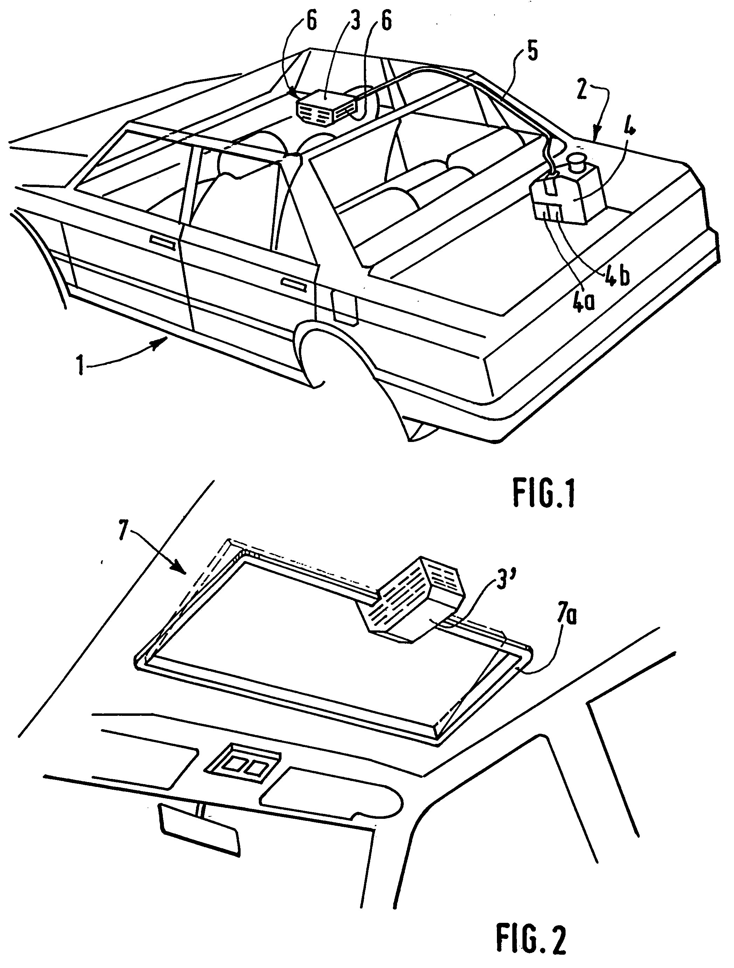

Le véhicule 1 représenté sur la figure 1 est muni d'un coffre à bagages 2 à sa partie arrière.

Conformément à l'invention, ce véhicule est équipé d'un brumisateur 3 qui est logé directement dans l'habitacle du véhicule 1.

Dans le mode de réalisation décrit, le brumisateur est assujetti au plafond de l'habitacle et se situe entre les places avant et les places arrière du véhicule.

Selon une variante de l'invention, le brumisateur 3 peut être monté dans l'épaisseur du plafond de l'habitacle de manière à pouvoir s'escamoter partiellement dans ce dernier pour diminuer son encombrement lorsqu'il n'est pas utilisé.

Le brumisateur 3 est relié à un réservoir d'eau 4 monté dans le coffre à bagages 2 du véhicule.

Le réservoir 4 est équipé d'une micropompe 4a, par exemple de type lave-glace, dont l'alimentation électrique 4b sert également au fonctionnement du brumisateur.

Des conduits 5 relient le brumisateur 3 au réservoir d'eau 4. Les conduits 5 comportent un tuyau d'alimentation d'eau et des conducteurs électriques véhiculant l'énergie électrique depuis l'alimentation 4b et permettant au brumisateur de commander électriquement le fonctionnement de la micropompe 4a pour maintenir constant le niveau de l'eau dans le brumisateur 3.

Selon une mise en oeuvre préférée de l'invention, on fait fonctionner le brumisateur dans l'habitacle du véhicule avant d'utiliser ce dernier, ce qui permet d'obtenir une grande efficacité de fonctionnement en atteignant une hygrométrie maximale qui pourrait gêner l'utilisateur du véhicule pendant son déplacement.

Ainsi, la température ayant été suffisamment abaissée, on peut cesser la brumisation pour utiliser le véhicule et vidanger le brumisateur 3 logé dans l'habitacle afin d'éviter tout débordement de l'eau. A cet effet, la micropompe 4a peut être actionnée inversement.

Pendant le fonctionnement du brumisateur 3, la dispersion de brouillard s'effectue vers l'avant et vers l'arrière du véhicule, par des fentes 6 situées à l'avant et à l'arrière du brumisateur 3.

On comprend que, de par sa position dans l'habitacle, le brumisateur 3 peut tirer profit du grand volume d'air disponible dans l'habitacle, cet air ayant été chauffé par les rayons du soleil, ce qui favorise d'autant plus la vaporisation de l'eau.

La figure 2 représente une variante du brumisateur représenté à la figure 1 dans laquelle le brumisateur 3' est assujetti au cadre 7a d'un toit ouvrant basculant 7.

Cette variante permet d'installer simultanément sur un véhicule un toit ouvrant 7 et un brumisateur 3', sans qu'il soit nécessaire de fixer ce dernier au plafond du véhicule. L'ensemble constitué par le toit ouvrant et le brumisateur 3' peut alors être commercialisé comme accessoire réalisant la double fonction de toit ouvrant et de brumisateur.

Avantageusement, on met en oeuvre le dispositif selon l'invention en créant un renouvellement de l'air dans l'habitacle, ce qui permet de limiter les risques de condensation de l'eau sur les parois les moins chaudes.

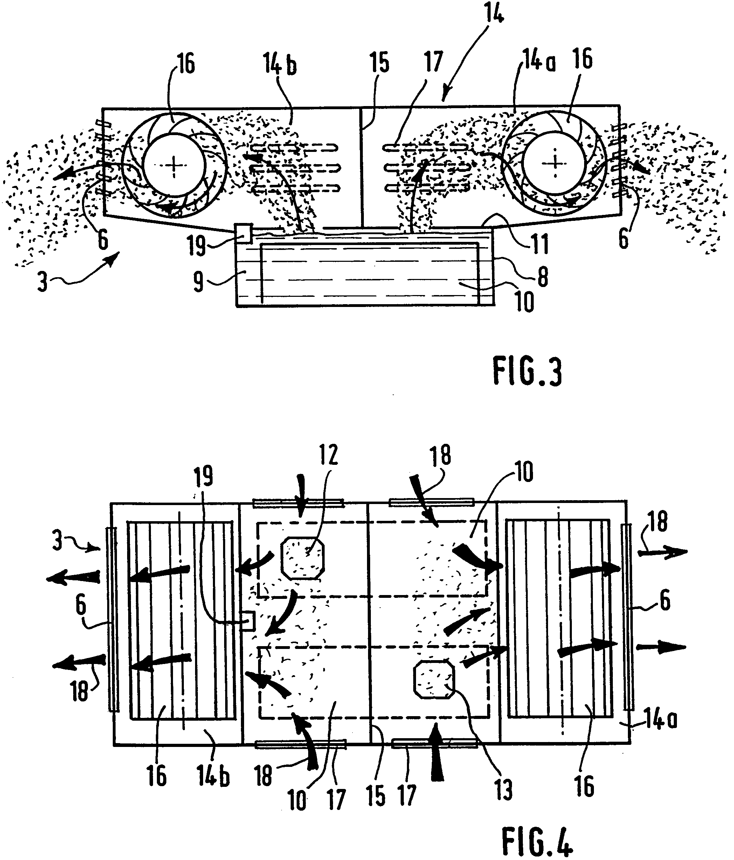

Sur les figures 3 et 4, on a schématiquement représenté le détail d'un brumisateur semblable à celui de la figure 1.

Le brumisateur 3 comporte inférieurement un récipient 8 rempli d'eau 9, dans lequel deux éléments piézoélectriques 10 sont totalement immergés.

Le récipient 8 est fermé supérieurement par une paroi 11. La paroi supérieure 11 comporte deux orifices 12 et 13, situés chacun au-dessus de l'un des deux éléments piézoélectriques 10.

Un boîtier 14, qui recouvre le récipient 8, est divisé par une paroi médiane 15 en deux compartiments 14a et 14b, dans chacune desquelles débouche l'un des deux orifices 12 de la paroi supérieure 11 du récipient 8.

Chaque compartiment 14a, 14b renferme un ventilateur 16 qui crée un courant d'air dans les compartiments 14a et 14b entre des fentes latérales 17 et les fentes avant et arrière 6 ménagées dans les parois du brumisateur.

Ainsi, comme représenté par les flèches 18, l'air sec pénètre dans les compartiments 14a et 14b au travers des fentes 17, et entraîne le brouillard issu des orifices 12 au travers des fentes 6, pour ressortir dans l'habitacle du véhicule.

On remarque que les fentes 6 comportent des lamelles inclinées vers l'intérieur qui sont destinées à récupérer les gouttelettes d'eau formées par condensation lors du passage du brouillard au travers des fentes 6.

La consommation d'eau 9 dans le récipient 8 entraîne une diminution du niveau d'eau qui est détectée par un capteur 19.

Ce capteur 19 est relié, par l'intermédiaire des conducteurs électriques du conduit 5, à la micropompe 4a du réservoir externe 4, de sorte que le capteur 19 peut commander le fonctionnement de la micropompe pour maintenir le niveau d'eau constant dans le récipient 8.

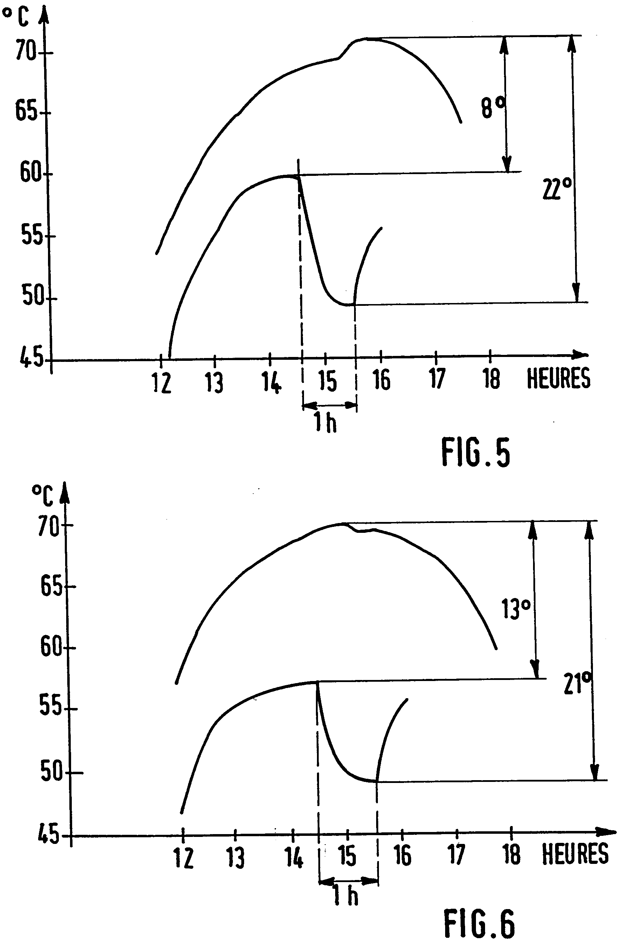

Les diagrammes des figures 5 à 10 résultent d'essais réalisés dans un véhicule exposé aux rayons du soleil entre 12 et 18 heures.

Chaque diagramme comporte une courbe supérieure qui correspond aux variations de la température dans l'habitacle du véhicule lorsqu'il est fermé, et une courbe inférieure qui correspond aux variations de la température dans l'habitacle du véhicule lorsqu'il est soumis à un renouvellement de l'air contenu dans l'habitacle à une cadence d'environ 10 volumes par heure, et dans lequel le dispositif selon l'invention a été mis en route pendant une période de 60 minutes, entre 14 heures 30 et 15 heures 30.

Pour ces essais, la consommation en eau du dispositif selon l'invention est d'environ 0,7 litre pendant l'heure de fonctionnement.

Dans d'autres conditions de fonctionnement, on pourrait consommer plus de 1,5 litre par heure.

Sur la figure 5, on a représenté les variations de la température au niveau du corps du conducteur.

La figure 6 représente les variations de la température au niveau de la tête du conducteur.

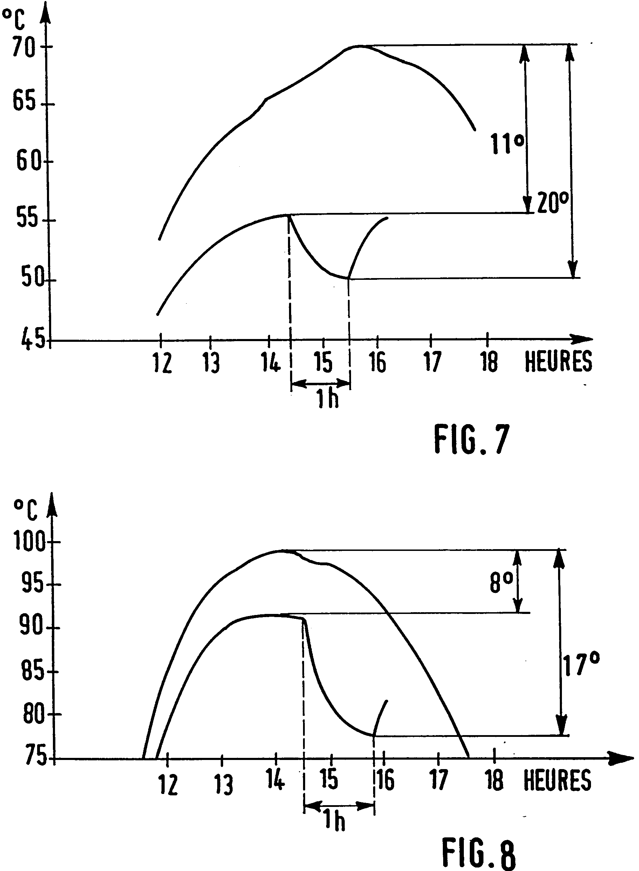

La figure 7 est un diagramme des variations de la température dans la partie arrière du véhicule.

La figure 8 représente les variations de la température à l'intérieur du tableau de bord du véhicule.

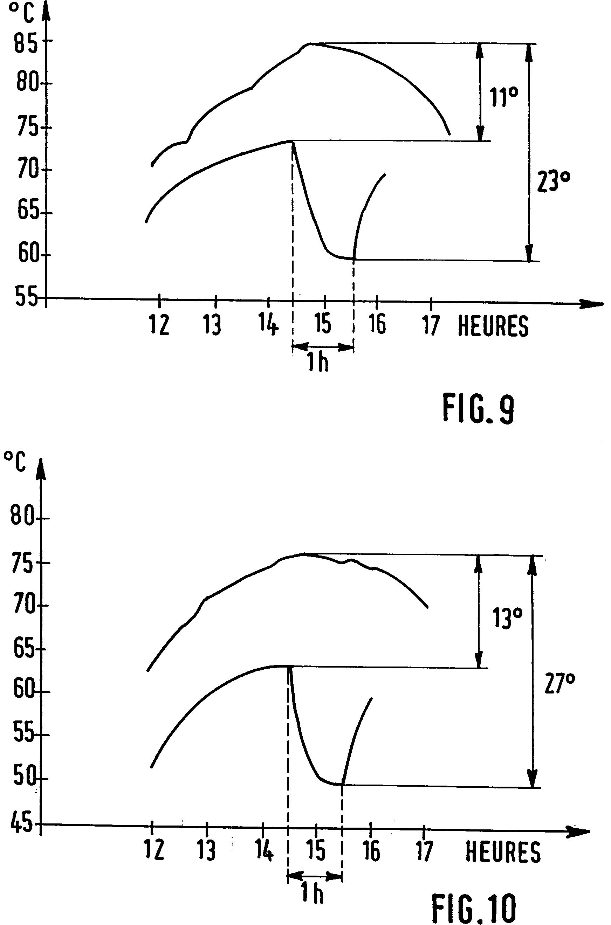

Sur la figure 9, on a représenté les variations de la température de la surface du tableau de bord exposé aux rayons du soleil.

Enfin, sur la figure 10, on a représenté les variations de la température de l'air au voisinage du tableau de bord.

Sur l'ensemble des figures 5 à 10, on voit clairement que d'une part, le renouvellement permanent de l'air dans l'habitacle permet de diminuer la température de ce dernier d'environ une dizaine de degrés et d'autre part que la mise en oeuvre du dispositif selon l'invention permet d'obtenir un gain total d'environ une vingtaine de degrés, après seulement une heure de fonctionnement.

Il est bien entendu que les modes de réalisation qui viennent d'être décrits ne présentent aucun caractère limitatif de la portée de l'invention et qu'ils pourront recevoir toutes modifications désirables sans sortir pour cela du cadre de l'invention.

## Revendications

**1 -** Dispositif pour abaisser la température ambiante dans l'habitacle d'un véhicule par pulvérisation de gouttelettes d'eau, caractérisé par le fait qu'il comporte un brumisateur d'eau (3,3') qui est directement logé dans l'habitacle du véhicule (1), et qui diffuse de fines gouttelettes d'eau directement dans l'habitacle du véhicule (1).

**2 -** Dispositif selon la revendication 1, caractérisé par le fait qu'il comporte des moyens permettant de déclencher le fonctionnement du brumisateur d'eau (3,3') avant d'utiliser le véhicule.

**3 -** Dispositif selon la revendication 1, caractérisé par le fait que le brumisateur (3,3') est assujetti au plafond de l'habitacle du véhicule (1), entre les places avant et les places arrière de ce dernier.

**4 -** Dispositif selon l'une quelconque des revendications 1 à 3, caractérisé par le fait que le brumisateur (2,3,3') comporte un récipient (8) contenant de l'eau (9), un émetteur à ultrasons (10) immergé dans ce récipient (8), et un dispositif soufflant (16) apte à créer un courant d'air au-dessus de la surface de l'eau.

**5 -** Dispositif selon la revendication 4, caractérisé par le fait qu'un réservoir d'eau externe (4) muni d'une pompe (4a) est raccordé au récipient (8) du brumisateur (3) par un conduit d'amenée d'eau (5), et que le récipient (8) du brumisateur (3) comporte un capteur (19) du niveau de l'eau (9) qui commande la pompe (4a) du réservoir externe (4) de manière à maintenir sensiblement constant le niveau de l'eau (9) dans le récipient (8) du brumisateur (3).

**6 -** Dispositif selon la revendication 5, caractérisé par le fait qu'il comporte une alimentation électrique (4b) logée dans l'épaisseur du réservoir d'eau externe (4).

**7 -** Dispositif selon l'une quelconque des revendications 5 et 6, caractérisé par le fait que le réservoir d'eau externe (4) est situé dans le coffre à bagages du véhicule (1).

**8 -** Dispositif selon l'une quelconque des revendications 1 à 7, caractérisé par le fait qu'il diffuse dans l'habitacle du véhicule (1) au moins 0,7 litre d'eau par heure.
